(19) Europäisches Patentamt
European Patent Office
Office européen des brevets

(11) **EP 3 512 072 A1**

(12) **EUROPEAN PATENT APPLICATION**

(43) Date of publication:
**17.07.2019 Bulletin 2019/29**

(51) Int Cl.:
**H02J 50/12** *(2016.01)*     **H02M 3/335** *(2006.01)*

(21) Application number: **18151714.5**

(22) Date of filing: **15.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Prodrive Technologies B.V.**
**5692 EM Son (NL)**

(72) Inventors:
• EVERTS, Jordi
**5692 EM Son (NL)**
• SLAATS, Noud Johan Hubert
**5692 EM Son (NL)**

(74) Representative: **Pronovem**
**Office Van Malderen**
**Avenue Josse Goffin 158**
**1082 Bruxelles (BE)**

(54) **CONTACTLESS ELECTRICAL ENERGY TRANSFER SYSTEM AND OPERATING METHOD THEREOF**

(57)     System (10) for contactless transfer of electrical energy, comprising a first side comprising a first bridge circuit (11) coupled to a first resonator circuit (121), a second side comprising a second bridge circuit (13) coupled to a second resonator circuit (122), wherein the first resonator circuit and the second resonator circuit are configured to be contactless inductively coupled for transferring electrical energy, wherein the second bridge circuit (13) comprises at least two actively switchable semiconductor switches, characterised in that the second side comprises means (182) for sensing phase and magnitude information of a current flowing between the second resonator circuit (122) and the second bridge circuit (13), and a second side controller (162) operable to actively switch the semiconductor switches to adapt an impedance of the second side on the basis of the sensed phase and magnitude information.

FIG 3

## Description

## Technical field

The present invention relates generally to an improved contactless (i.e., wireless) electrical energy transfer system, and more particularly, to a contactless electrical energy transfer system in which energy is transferred between a primary-side coil, as part of a primary-side resonator circuit that is connected to a primary-side switching circuit, and a secondary-side coil, as part of a secondary-side resonator circuit that is connected to a secondary-side switching circuit. The primary-side coil and the secondary-side coil are electrically isolated from each other with a coupling coefficient $k$. The present invention is also related to an operating method of systems of the above kind that regulates the amount of power that is transferred through contactless power transfer without the need for additional high-speed wireless communications.

## Background art

Contactless electrical energy transfer (CEET) is a known alternative for wired or conductive power transfer. It is used for mobile consumer electronic devices that are battery operated. These devices are charged wirelessly by means of induction by placing a device equipped with a secondary (receiver) coil near a charging station equipped with a primary (transmitter) coil. The primary coil, which is driven by an alternating current (AC), generates an electromagnetic field which induces an alternating current in the secondary coil that may be used to power the device or charge the batteries of the device. Typically, in these applications the airgap between the coils is small and the coils are well aligned, and a high magnetic coupling factor $k$ (e.g. $k>0.5$) is achieved that ensures efficient power transfer without significant energy losses.

Lately, there is an increasing interest to wirelessly charge electric vehicles and hybrid electric vehicles. In these applications the coils are only weakly coupled (e.g. k smaller than 0.5, e.g. in the range 0.1-0.3) with a large self-inductance and a low mutual inductance, due to the larger airgap (e.g. on the order of a few cm) and larger misalignment (e.g. on the order of a few cm) between the primary and the secondary coil. Without additional technical measures this may result in a low efficiency of energy transfer.

Furthermore, as a result of variable distance between the coils and variable alignment of the coils, the coupling coefficient k can vary over a large range (e.g. 0.1-0.3). This also holds for the range of the self-inductance values of the coils, which also vary based on the relative position of the coils as a result of a changing magnetic path and thus a changing reluctance. In addition, the charging voltage and/or current, and thus the charging power, can significantly change according to the charge status of the high-voltage batteries of the vehicle.

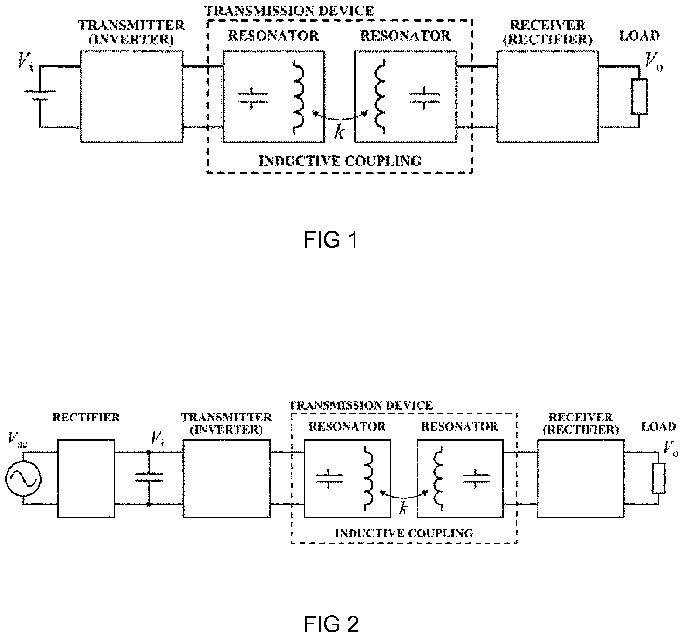

It is known in the art that implementing resonant electric circuits on the transmitter and receiver side and using these resonant circuits at or near their resonant frequency can improve the efficiency of energy transfer in situations where the coupling factor is low. Referring to Fig. 1, these resonant circuits generally comprise a coil and a capacitor placed in parallel or in series to form a so called tank circuit. The simultaneous use of the resonant frequency of the circuit on both the primary and the secondary side is typically accomplished by matching the impedances of both sides. However, in situations where the coupling factor is not always the same and/or constant this requires actively controlling the parameters that influence the resonance frequency of the tank circuit.

A typical CEET system comprises a transmitter and a receiver. The transmitter typically generates an AC signal from a DC power source and is therefore referred to as 'inverter'. The AC signal is applied to the primary-side resonator and transmitted to the secondary-side resonator through magnetic coupling via the air and further conditioned by the receiver to provide the desired power to the load, i.e., for example a battery of an electric vehicle. The inverter can for example be a full bridge circuit with active semiconductor components while the rectifier can, for example, be a passive diode bridge rectifier.

As shown in FIG. 1, generally, the input of the inverter of the CEET converter is a DC voltage, which can be generated from an AC power source by an additional rectifier placed at the input of the inverter as shown in FIG. 2. Typically the output of the CEET system is DC power that is provided to a load, such as for example the high-voltage batteries of an electric vehicle.

In order to deal with the wide ranges of the coupling coefficient, of the self-inductances of the coils, and of the charging voltage and/or current, the impedances of the primary-side and secondary-side resonators are typically matched in order to allow for load-independent behavior and stable, low-loss power transfer at the highest efficiency possible. Prior art CEET systems can be distinguished based on the presence of active impedance matching circuits (IMNs; e.g. as in US8643326) as part of the primary-side resonator and/or as part of the secondary-side resonator. These IMNs are used for maintaining impedance matching during the mentioned parameter changes (coupling, self-inductance, voltages, power) which results in a more-efficient recovery of the energy stored in the self-inductances of the resonator coils. US 8643326 describes the use of a tunable component, like a tunable capacitor, for this purpose. The main disadvantage of such conventional systems is the additional hardware required to realize the IMNs, which not only increases the complexity of the control but also leads to a reduced efficiency, stability, reliability, and power density of the CEET system.

As an alternative to implement IMNs at the primary and/or secondary side of the CEET, an additional DC-DC converter can be placed at the input and/or output side of the CEET, providing the functionality of impedance matching by controlling the input and/or output impedance of the CEET through control of the input and/or output DC voltage (e.g. as in R. Bosshard et. al., "Multi-Objective Optimization of 50 kW/85 kHz IPT System for Public Transport.", IEEE JOURNAL OF EMERGING AND SELECTED TOPICS IN POWER ELECTRONICS, VOL. 4, NO. 4, pp. 1370-1382, DECEMBER 2016). Evidently, any additional power conversion stage (e.g. a DC-DC converter) added at the input and/or at the output of a CEET converters adds cost, volume, and weight to the system and reduces the efficiency due to the losses occurring during the power conversion. Also the reliability of the system is reduced due to the additional circuitry (power circuits and control circuits).

US 2017/047768A1 describes a CEET system which regulates the transmitted power by pulse pattern modulation of the inverter and/or rectifier device to eliminate the requirement for an additional DC/DC converter at the secondary side to match the impedances. This is achieved by omitting or masking one or multiple half waves or full waves, i.e. at the inverter side and/or at the rectifier side, by activating a freewheeling state during which no current flows out of the power source (inverter side) or into the load (rectifier side). This implies that the transmitted power is not regulated cycle by cycle (or half-cycle by half-cycle), i.e. the average power over time is regulated, which results in a sub-optimal power transfer. Furthermore, it implies that fundamental frequency for energy transfer will be significantly lowered, which is a problem in light of standardization which requires the specification of a small range of fundamental frequencies.

**Summary of the invention**

In general, it can be said that in order to realize an efficient CEET system, the circulating currents in the primary-side and secondary-side resonators should be minimized, resulting in lower conduction losses. Also, operation in the so-called zero-voltage-switching (ZVS) mode or the zero-current-switching (ZCS) mode is advantageously ensured in order to reduce the switching losses. However, for the CEET systems of interest these conditions are hard to achieve simultaneously due to a low coupling coefficient k, a large range of the coupling coefficient, a large range of the self-inductances of the coils, and/or a large range of the desired charging voltage and/or current, and especially a combination of these conditions.

The present invention therefore aims to provide systems and related methods for contactless transfer of electrical energy with minimum complexity that are able to meet the requirement of efficient energy transfer under the above conditions.

According to a first aspect of the present invention, there is provided a system for contactless transfer of electrical energy, as set out in the appended claims. The system comprises a first side comprising a first bridge circuit coupled to a first resonator circuit, and a second side comprising a second bridge circuit coupled to a second resonator circuit. The first resonator circuit and the second resonator circuit are configured to be contactless inductively coupled for transferring electrical energy. The second bridge circuit comprises at least two, advantageously four actively switchable semiconductor switches.

According to the first aspect, the system - in particular, the second side - comprises means for sensing phase and magnitude information of a current flowing between the second resonator circuit and the second bridge circuit, and a second side controller operably coupled to the actively switchable semiconductor switches. The second side controller is advantageously configured to actively switch the semiconductor switches to adapt an impedance of the second side - in particular, the impedance of the second bridge circuit - on the basis of the phase and magnitude information that is sensed by the means for sensing. The phase may refer to a time position of a predetermined point on a waveform curve. The means for sensing phase and magnitude information is advantageously configured to sense a time instant of a zero crossing of the current

According to a second aspect, there is provided an inductive power transfer system for a vehicle, as set out in the appended claims. The inductive power transfer system comprises a system according to the first aspect described hereinabove. Advantageously, the first side is comprised in a ground assembly of the inductive power transfer system. Additionally, or alternatively, the second side is mounted on the vehicle. It would alternatively be possible to provide the inverse case, e.g. first side is mounted on the vehicle and/or the second side is mounted in the ground assembly.

According to a third aspect, there is provided a vehicle assembly, as set out in the appended claims. The vehicle assembly is configured for inductive power transfer between the vehicle assembly and a ground assembly. The vehicle assembly advantageously comprises the first side or the second side of the system according to the first aspect.

According to a fourth aspect, there is provided a method for contactless transfer of electrical energy, as set out in the appended claims. Advantageously, the method comprises a step of inputting electrical energy in a first side resonator circuit and transferring at least part of the electrical energy to a second side resonator circuit, and a further step of sensing phase and magnitude information of a second side current flowing between the second side resonator circuit and a bridge circuit coupled to the second side resonator circuit, and actively adapting a switching time of the bridge circuit.

In the above aspects, the first bridge circuit can be an inverter and/or the second bridge circuit can be a rectifier. As an alternative, the first bridge circuit can be a rectifier and/or the second bridge circuit can be an inverter. Advantageously, the impedance can be adapted or controlled either at a primary side (i.e., power transmitting side), or at a secondary side (i.e., power receiving side). Likewise, the power that is transferred over the first and second resonator circuits can be adapted or controlled either at the primary side or at the secondary side.

Advantageously, where both power control and impedance control are implemented, they are implemented at opposite sides. By way of example, power control can be implemented at the primary side and impedance control can be implemented at the secondary side. Alternatively, power control is implemented at the secondary side and impedance control is implemented at the primary side.

Further advantageous aspects are set out in the dependent claims.

In a yet further aspect, the following is provided:

A system for the contactless energy transfer from a source to a load, including a transmission device, comprising a first resonator circuit and a second resonator circuit, for the contactless transfer of electrical energy, including an inverter device which is arranged between an energy source which provides supply power and the input of the transmission device and is designed to transfer electrical energy from the energy source to the transmission device, including a rectifier device which is arranged between the output of the transmission device and the load and is designed to transfer the electrical energy from the transmission device to the load, including a measurement device that is designed to obtain phase and magnitude information of the current signal at the output of the inverter device, including a measurement device that is designed to obtain phase and magnitude information of the current signal at the input of the rectifier device, wherein the inverter device comprises a local control device that is designed to regulate the transmitted electrical power via a cycle by cycle (or half-cycle by half-cycle) pulse pattern modulation of the control signals of the inverter device based on the phase and magnitude information of the current signal at the output of the inverter device, and/or wherein the rectifier device comprises a local control unit that is designed to regulate an impedance via a cycle by cycle (or half-cycle by half-cycle) pulse pattern modulation of the control signals of the rectifier device based on the phase and magnitude information of the current signal at the input of the rectifier device.

Furthermore, the following is provided:

A method for the contactless transfer of electrical energy from a source to a load, including the steps of cyclically switching electrical supply power provided by an energy source to a transmission device, comprising a first resonator circuit and a second resonator circuit, which is designed for the contactless transfer of electrical energy, contactlessly transferring the electrical energy in the transmission device, cyclically switching electrical power provided by the transmission device to the load, wherein an inverter performs the cyclically switching of the electrical supply power provided by the energy source and a rectifier performs the cyclically switching of the electrical power provided by the transmission device, and wherein in at least one of the steps of cyclically switching, the respective power is regulated cycle by cycle (or half-cycle by half-cycle) via pulse-width modulation of a square wave voltage, which may be of single fundamental frequency, and that has at the least three levels, and wherein the pulse modulation of the control signals of the inverter device is based on phase and magnitude information of the current signal at the output of the inverter device, and wherein the pulse modulation of the control signals of the rectifier device is based on phase and magnitude information of the current signal at the input of the rectifier device.

Finally, the following is provided:

A vehicle assembly including a contactless electrical energy transfer system according to the present invention, including a vehicle, wherein the rectifier device is arranged in the vehicle, and wherein the inverter device is arranged outside the vehicle, and wherein the transmission device, comprising a first resonator circuit and a second resonator circuit, is at least partially arranged in the vehicle and partially outside the vehicle.

**Brief description of the figures**

Aspects of the invention will now be described in more detail with reference to the appended drawings, wherein same reference numerals illustrate same features.

FIG. 1 is a block diagram of a contactless electrical energy transfer system with DC (e.g. a battery) input.
FIG. 2 is a block diagram of a contactless electrical energy transfer system with AC (e.g. the AC mains) input.
FIG. 3 is a block diagram of a contactless electrical energy transfer system of the present invention.
FIG. 4 is a schematic of the inductive coupled power stage with a series resonant primary-side resonator, a primary-side controlled full-bridge circuit, a series resonant secondary-side resonator, and a secondary-side controlled full-bridge circuit as an example embodiment of aspects of the present invention.
FIG. 5 is an equivalent circuit diagram of the circuit in FIG. 4 that shows the self-inductances and the mutual inductance of the coils.

FIG. 6 shows key waveforms of the power stage in FIG. 4 and of the equivalent circuit diagram in FIG 5.

FIG. 7 shows the fundamental components of the key waveforms of FIG. 6.

FIG. 8 shows voltage and current waveforms in one specific embodiment of a transmission system according to aspects of the present invention.

FIG. 9 shows voltage and current waveforms in one specific embodiment of a transmission system according to aspects of the present invention.

FIG. 10 shows voltage and current waveforms in one specific embodiment of a transmission system according to aspects of the present invention.

FIG. 11 shows voltage and current waveforms of the power stage in FIG. 4 when the power stage is used for fast fault protection.

FIGs. 12A-C show implementations of bridge circuits according to an alternative aspect of the present invention.

FIG. 13 shows key waveforms of the alternative bridge circuit implementation of FIG. 12B.

**Detailed description**

Pulse pattern modulation may be understood to mean that the inverter device and/or the rectifier device are activated by positive and negative pulse-like signals, for example, square-wave signals. The pulse pattern modulation according to the present invention comprises controlling the phase and/or duty cycle of these pulse-like signals, for instance by setting a pulse width and a delay relative to a zero crossing of the current. This way both power and impedance can be controlled, while in the meantime the frequency can be kept within legal limits. The way pulse pattern modulation is handled in present aspects differs from the way this is handled in the prior art. In the prior art, such as in US 2017/047768, pulse pattern modulation comprised controlling the frequency, number, and/or sequence. In particular, at the inverter side, the energy transfer was activated by a square-wave signal of a fundamental frequency with omitted half waves or full waves. At the rectifier side, pulse pattern modulation according to the prior art meant that not all half waves or full waves of the current signal transmitted by the transmission device were rectified and thus conveyed to the load; rather, some half waves or full waves were omitted via a controlled short circuit of the rectifier input and recirculate in the secondary oscillating circuit of the transmission device.

Aspects of the present invention are based on the finding that the efficiency of contactless energy transfer can be improved by providing a CEET system that allows for cycle by cycle (i.e. per switching period), or half-cycle by half-cycle, power control and/or impedance control in the inverter device and/or the rectifier device. This may be achieved by providing square-wave voltages at the output of the inverter and/or at the input of the rectifier that are pulse-width modulated and/or phase modulated and are of single fundamental frequency (i.e. the fundamental switching frequency). By so doing, the circulating currents in the resonators can be minimized in all desired operating points. In addition, soft switching (e.g. ZVS (zero-voltage-switching) and/or ZCS (zero-current-switching) can be assured, even during transients, while keeping the frequency of the current signals and magnetic field within reasonable values in order to comply with legal limit values without compromising efficiency. This fundamental frequency of the square-wave voltages may be changed for efficiency optimization, although this is not necessary.

Accordingly, in order to be able to perform cycle by cycle (or half-cycle by half-cycle) power control and/or impedance control in the inverter device and/or the rectifier device and to provide square-wave voltages at the output of the inverter and/or at the input of the rectifier that are pulse-width modulated and/or phase modulated, CEET systems according to aspects of the present invention comprise a measurement device that is configured to obtain phase and magnitude information of the current signal at the output of the inverter device. Alternatively, or in addition, the CEET systems comprise a measurement device that is configured to obtain phase and magnitude information of the current signal at the input of the rectifier device. Using the phase and magnitude information obtained, a (local) control unit can adapt the pulse-width and/or phase of the square-wave voltage at the output of the inverter and/or at the input of the rectifier such that a desired energy transfer is achieved in an efficient way by minimizing the circulating currents and by operating under full or partial ZVS and/or ZCS while the fundamental frequency of the current signals and magnetic field can be kept within legal limit values. By so doing, energy transfer can be tightly regulated and can be maintained substantially constant for varying input and/or output voltage conditions, varying coupling coefficients, and varying self-inductance values, without the need for high-speed wireless communications between the control units at primary and secondary side. Advantageously, efficient energy transfer is achieved by appropriate impedance control and/or appropriate power control as indicated.

One of the first and second bridge (switching) circuits (i.e. the inverter or the rectifier) can be operated with a driving frequency, while advantageously the other one of the first and second bridge (switching) circuits is operated in relation to the phase information of the corresponding resonator current and, consequently, settles at a switching frequency equal to the driving frequency of the one switching circuit. The resulting square wave voltages at the output of the inverter and at the input of the rectifier are advantageously of single frequency, i.e., the frequency of the fundamental component equals the switching frequency which is a free parameter that can be selected fixed or that can be adapted depending on the operating condition (for example coupling coefficient, charging power, battery voltage, etc.) in order to optimize efficiency. Furthermore, the resonators might be designed such that their resonance frequencies is in the vicinity of the desired switching frequency range in order to achieve the desired power transfer.

By controlling the pulse-width of the square wave voltages at the output of the inverter device and/or at the input of the rectifier device, a lower voltage is applied to the resonator circuits on average over time. This contributes to the realization of impedance matching without additional hardware components. Furthermore, an optimal impedance setting can be achieved, for example in case the inverter is operated with a driving frequency, by adapting the phase between the square-wave voltage at the input of the rectifier and the corresponding input current of the rectifier in order to obtain a certain desired rectifier impedance. This impedance setting can be used to achieve a high efficiency, for example, by controlling the impedance such that the circulating currents are minimized for each value of the coupling coefficient, of the self-inductances of the coils, and of the charging voltage and/or current.

In soft-switching topologies, which are advantageously also used in the CEET systems described herein, in particular at higher transmission power and higher switching frequency, the semiconductor switches are turned-on and/or turned-off only at very low current near the zero crossing of the periodic current signal, or at very low voltage while the anti-parallel free-wheeling diode conducts the current. A cycle by cycle (or half-cycle by half-cycle) control of the pulse-width and/or phase of the square-wave voltages at the output of the inverter and at the input of the rectifier, advantageously allows to meet these conditions in all operating points, also in partial load conditions and during transients, in contrast to CEET systems of the prior art.

The CEET system as described herein provides a system design which constitutes minimum hardware complexity, since no additional active or passive elements are required and achieves optimal efficiency even at high power, full-load operation, and partial load operation, and for low values of the coupling coefficient, and for wide ranges of the coupling coefficient, self-inductances of the coils, and charging voltages and/or currents. Furthermore it allows for bidirectional energy transfer while there is no need for high-speed communication since the power and/or impedance control is advantageously implemented using local control units. In addition, the topology and the switching strategy may be used at high frequencies, which is made possible by the soft-switching operation.

Advantageously, either one or both the inverter device and the rectifier device are arranged in the form of a full-bridge circuit, comprising four actively controlled semiconductor switching devices. Either the inverter device or the rectifier device is advantageously designed to regulate the power cycle by cycle (or half-cycle by half-cycle) at all design-relevant operating points. In addition, the other switching device (inverter or rectifier) can be designed to regulate its impedance cycle by cycle (or half-cycle by half-cycle), wherein the desired ZVS and/or ZCS operation mode is advantageously maintained (using soft-switching operation) in both the inverter device and rectifier device. Either the inverter device or the rectifier device is advantageously operated with a driving switching frequency while the other device is operated with a following switching frequency. For example, in case the inverter is operated with a driving frequency, the rectifier automatically settles at a switching frequency equal to the driving frequency of the inverter device, and synchronization of the switching patterns thus automatically occurs.

Cycle by cycle (or half-cycle by half-cycle) power control may mean, for example in case the inverter device is operated with a driving frequency, that the pulse-width (i.e., duty cycle) of the square-wave voltage at the output of the inverter device is adapted cycle by cycle (or half-cycle by half-cycle) based on the phase and magnitude information of the corresponding resonator current such that a certain power level is obtained. At the same time, cycle by cycle (or half-cycle by half-cycle) impedance control is performed by the rectifier device by adaptation of the pulse-width and the phase of the square-wave voltage at the input of the rectifier device based on the phase and magnitude information of the corresponding resonator current. By so doing, the rectifier device automatically settles at a switching frequency equal to the driving frequency of the inverter device, and synchronization of the switching patterns thus automatically occurs. Both the active and the reactive part of the rectifier impedance can be controlled since the rectifier device has two degrees of freedom for pulse pattern modulation, being the phase and the pulse-width of the square-wave voltage applied at the input of the rectifier. Therefore, multiple solutions exist to set an optimal impedance. This allows for efficiency optimization under varying input and/or output voltage conditions, varying coupling coefficients, and varying self-inductance values, for example by minimization of the circulating current while maintaining ZVS and/or ZCS conditions. With regard to efficiency optimization, also the driving frequency of the inverter is a free optimization parameter. The combination of cycle by cycle (or half-cycle by half-cycle) local power control and local impedance control leads stable system behavior during transients as a power balance is automatically achieved.

The energy transfer system can include a global control device which is coupled to the local control units of the first and/or second side. The global control unit may be configured to generate optimal control set-points for one or both the local control units, thereby defining optimal phase and/or pulse-width settings for the bridge circuits, e.g. of the inverter and/or rectifier, in such a way that, taking into consideration the determined system properties such as coupling coefficient of the coils, desired power level, and the battery voltage, an optimal operating point of the overall system is achieved with respect to loading of the components, the magnetic leakage field, heat dissipation, and transmission losses. A communication channel between the first side and the second side is advantageously provided. This communication can be of low speed, because it only generates control set-points for one or both the local control units, while the cycle by cycle (or half-cycle by half-cycle) power control and impedance control still occurs locally by the local control units. In case of a global control, the global controlled variable, for example the battery charging current, should be measured.

A rectifier or inverter device, either used for power control or for impedance control, that is operated with a driving frequency can be implemented as any form of active bridge circuit that is able to generate an AC square-wave voltage with at least three voltage levels. For example, a full bridge circuit can generate an AC square-wave voltage with three voltage levels (i.e., the positive DC bus voltage, zero, or the negative DC bus voltage).

A rectifier or inverter device, either used for power control or for impedance control, that is operated with a 'following' frequency can be implemented as an active bridge circuit that is able to generate an AC square-wave voltage with at least two voltage levels. Besides a full bridge circuit, this may also be achieved with a half-bridge circuit since in this case the phase between the square-wave voltage and the corresponding current can be adapted (due to operation with 'following' frequency), which is sufficient to regulate the power or impedance cycle by cycle (or half-cycle by half-cycle).

Phase information of the output current of the inverter and of the input current of the rectifier may be obtained using a current measurement transformer with zero-crossing detection circuit.

**Description of embodiments**

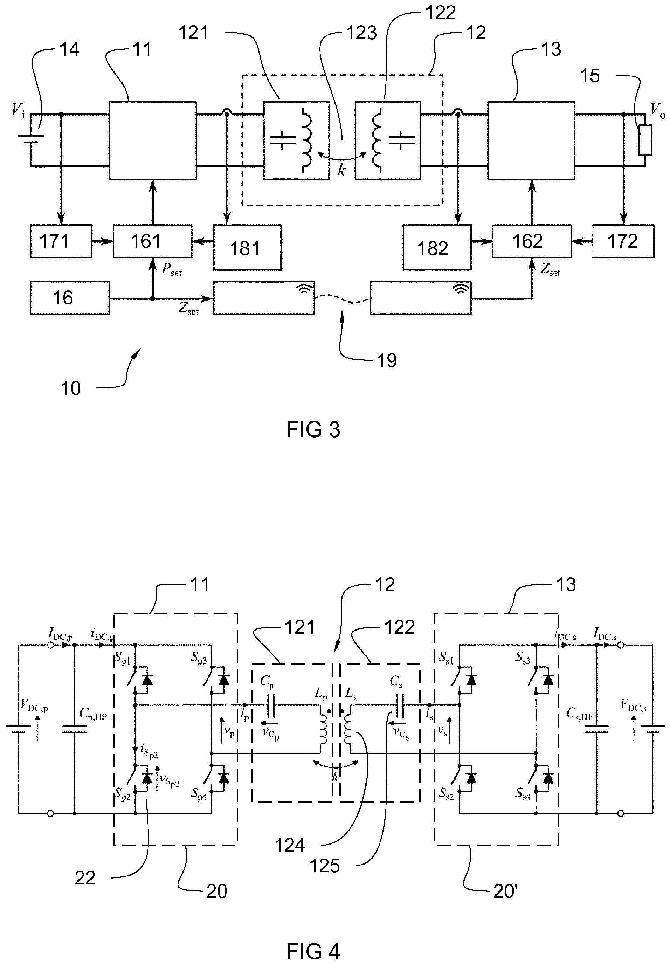

FIG. 3 shows a block diagram of the contactless electrical energy transfer (CEET) system 10 according to aspects of the present invention. The DC input side comprises a controlled bridge circuit (transmitter/inverter) 11 connected to a primary-side resonator 121 which forms part of the transmission device 12. The inverter 11 is connected to a DC power source 14 and converts the DC input voltage into a switched, square wave AC voltage that is applied to the primary-side resonator 121. The DC output side comprises a controlled bridge circuit (receiver/rectifier) 13 connected to a secondary-side resonator 122 which forms part of the transmission device 12. The rectifier 13 rectifies the AC current of the secondary resonator 122 into a DC current which is provided to a DC load 15. At the same time the DC output voltage of the secondary-side switching circuit is converted into a switched, square-wave AC voltage that is applied to the secondary-side resonator.

One of the bridge circuits 11 or 13, for example the inverter 11, is operated with a driving frequency while the other, for example the rectifier 13, operates with a following frequency. The pulse signals used to drive the bridge circuits are generated by local controllers 161, 162 of the primary side and secondary side, respectively. Either one or both the primary side and the secondary side may further comprise respective voltage sensing units 171, 172 to sense voltage input to the inverter 11 or output from rectifier 13, and may further comprise sensing units 181, 182 for sensing the phase and magnitude of the AC current that flows between the respective bridge circuit 11, 13 and the transmission device 12. One of the local controllers 161, 162, for example the primary side controller 161, is configured to generate control pulses that are of a driving frequency (switching frequency). As will be explained in more detail below, the other local controller, for example the secondary side controller 162, is configured to generate pulses that are of following frequency (i.e. following the driving frequency). One of the local controllers, for example the primary side controller 161, may be implemented as power controller to regulate the input power of the inverter 11. The other local controller, for example the secondary side controller 162, may be implemented as impedance controller to regulate the active and/or the reactive part of the impedance of rectifier 13. The power and the impedance may be controlled/regulated cycle by cycle (or half-cycle by half-cycle). A main controller 16, e.g. provided at the input side, may be configured to generate high-level set-points for the local controllers 161 and 162, for example the power set-point Pset for the local power controller (e.g. 161), and the impedance set-point for the local impedance controller (e.g. 162). The power set-point defined by the main controller 16 may be based on external inputs such as for example the charge state of a battery. The impedance set-point defined by the main controller 16 may be defined such that the system efficiency is optimized for each power set-point and for each specific condition of the input and/or output voltage, the coupling coefficient, and the self-inductance values, for example by minimization of the circulating currents in the transmission device while maintaining ZVS and/or ZCS conditions in both the inverter and rectifier device. The main controller 16 may also be configured for the calculation of other free control parameters such as for example the switching frequency of the driving switching circuit.

Communication between the main controller and the local controllers may be implemented using wired or low-speed wireless communication. By way of example, main controller 16 is coupled to local controller 161 through a wired communication interface. Coupling between main controller 16 and local controller 162 at the secondary side can be implemented through a wireless communication interface 19, which advantageously need not be high-speed, e.g. communication speed lower than the driving frequency.

The primary-side and secondary-side resonators 121, 122 comprise coils that are electrically isolated from each other and that are coupled through an air gap 123 with a coupling coefficient k. The resonators are implemented with a resonant topology in order to recover the energy stored in the relatively large self-inductances of the air transformer. Generally, any resonant topology can be used for both the primary-side and secondary-side resonators. In addition, the resonant frequency (or resonant frequencies) of the resonators are free design parameters which can be optimized for maximum efficiency of the CEET system.

The power control and impedance control according to aspects of the invention will now be described for the case inverter 11 is operated with driving frequency. At the primary side (input), the DC input voltage of the inverter 11 and the magnitude and phase of the AC output current of the inverter are sensed. The AC square-wave voltage generated by the inverter 11 is of driving frequency which may be set in dependence on the coupling coefficient, the demanded power level, and the input and output voltages of the CEET system in order to maximize efficiency. The phase of the AC square-wave voltage is serving as a reference (driving frequency) and advantageously does not change during operation. The phase information of the output current of the inverter 11 is obtained by sensing unit 181 with reference to the AC square-wave voltage generated by the inverter. The sensed input voltage (by unit 171), the sensed current, and the sensed phase (by unit 181) are used to control the pulse-width of the AC square-wave voltage generated by the inverter 11, such that the power that is transferred from the inverter 11 to the primary-side resonator 121 is maintained substantially constant and independent of output voltage changes and load changes.

At the secondary side (output), the DC output voltage of the rectifier 13 and the magnitude and phase of the AC input current to the rectifier 13 are sensed by units 172 and 182 respectively. An AC square-wave voltage is generated by the rectifier 13 and is of following frequency, i.e. the AC square-wave voltage is applied with reference to the phase of the AC input current of the rectifier, that is induced in the secondary side resonator 122. The sensed output voltage by unit 172 and the sensed current by unit 182 are used as input for the secondary side controller 162 which in turn is configured to control the phase and the pulse-width of the AC square-wave voltage generated by the rectifier, such that the impedance of the rectifier is regulated. The frequency of the AC square-wave voltage generated by the rectifier 13 is following the frequency of the AC input current of the rectifier, and settles at the driving frequency (switching frequency) of the inverter 11. During transients such as power changes, input voltage and output voltage changes, and changes of the coupling coefficient, the two frequencies may however differ from each other.

The sensing units 181 and 182 may comprise a current measurement transformer with zero-crossing detection circuit for sensing phase and magnitude information of the output current of the inverter 11 and of the input current of the rectifier 13, respectively.

FIG. 4 shows an electric circuit diagram of an exemplary embodiment of a CEET system according to the present invention, e.g. of CEET system 10 of FIG. 3. The transmission device 12 comprises resonant primary-side and secondary-side resonators. Both the bridge circuits of the primary-side and the secondary side (inverter 11 and rectifier 13 respectively) are arranged in the form of a full-bridge circuit 20, 20', each comprising four actively controlled semiconductor switching devices $S_{p1}$ - $S_{p4}$ and $S_{S1}$ - $S_{S4}$ respectively, which are shown with their internal anti-parallel diodes 22. Each full bridge 20, 20' is able to generate a three-level $\leq$ 50% duty-cycle AC square wave voltage at the resonator terminals.

Furthermore, both the input-side and output-side resonators 121, 122 are advantageously implemented as a series connection of an energy transfer coil 124 and a series capacitor 125, wherein each series connection forms a resonant tank. Still referring to FIG. 4, the input power source and the load may both be replaced by a voltage source, i.e. $V_{DC,p}$ and $V_{DC,s}$ respectively, under the assumption that the input voltage and output voltage are constant and have negligible ripple. This is because the high-frequency content of the input current $i_{DC,p}$ of the input-side bridge circuit 20 and of the output current $i_{DC,s}$ of the output-side bridge circuit 20' are filtered by high-frequency filter capacitors $C_{p,HF}$ and $C_{s,HF}$, respectively, facilitating smooth DC currents $I_{DC,p}$ and $I_{DC,s}$, and smooth DC voltages $V_{DC,p}$ and $V_{DC,s}$.

One advantage of an active bridge implementation of rectifier 13 at the secondary side, is that it allows for gradually increasing the start up current between rectifier and load. Since switches $S_{s1}$ - $S_{S4}$ are actively switchable, the voltage level at the load 15 can be made to gradually increase. This is in contrast to a diode bridge, where the start up current is largely uncontrolled during precharging of the capacitor $C_{s,HF}$ by the diodes.

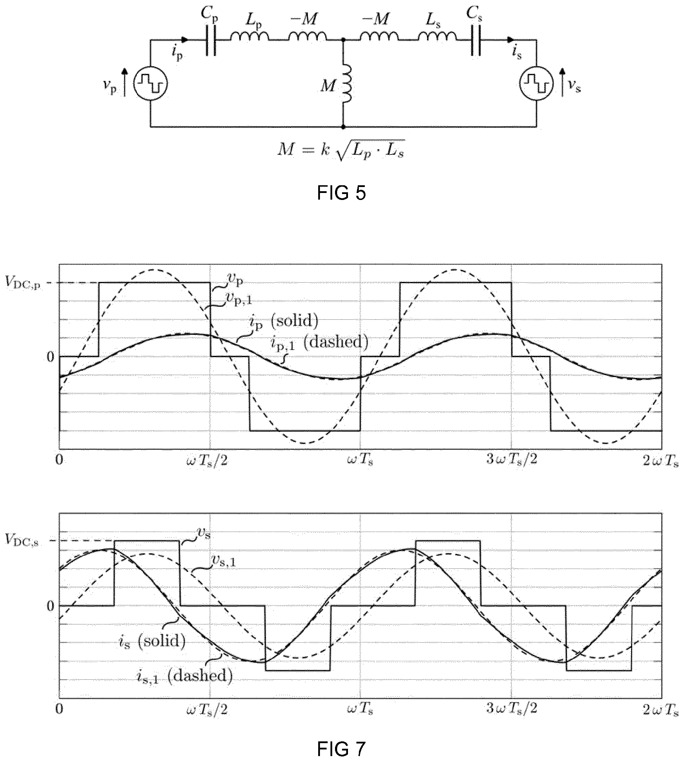

To facilitate the analysis of the circuit, FIG. 5 shows an equivalent circuit of the power stage of FIG. 4 with the self-inductances $L_p$, $L_s$, and mutual inductance M of the resonator coils 124. Also, in FIG. 5 the bridge circuits 20, 20' of the transmitter and receiver are replaced by an AC voltage source $v_p$, $v_s$ respectively, which can produce a three-level (+$V_{DC}$ Volts, 0 Volts, - $V_{DC}$ Volts), $\leq$ 50% duty-cycle square wave terminal voltage with a magnitude $V_{DC}$ the DC voltage of the respective bridge, i.e. $V_{DC} = V_{DC,p}$ for the primary side and $V_{DC} = V_{DC,s}$ for the secondary side. This is under the assumption of ideal semiconductor switching devices, i.e., semiconductor devices that exhibit zero resistance when in the on state, infinite resistance when in the off state, and instantaneous transition between the on and the off state. Furthermore, the primary-side resonator 121 is formed by capacitor $C_p$ and self-inductance $L_p$. The secondary-side resonator 122 is formed by capacitor $C_s$ and self-inductance $L_s$. The approximate resonant frequency $f_{0,p}$ of the primary-side resonator circuit is given by:

$$f_{0,p} = \frac{1}{2\pi\sqrt{L_p \cdot C_p}},$$

The approximate resonant frequency $f_{0,s}$ of the secondary-side resonator circuit is given by:

$$f_{0,s} = \frac{1}{2\pi\sqrt{L_s \cdot C_s}}.$$

$f_{0,p}$ and $f_{0,s}$ are design parameters. Beneficial for the efficiency of the energy transfer is to match the resonant frequencies $f_{0,p}$ and $f_{0,s}$, i.e., their value should be approximately equal, cancelling the voltage drop across the $C_p$-$L_p$ and the $C_s$-$L_s$ series connection when the switching frequency of the driving bridge circuit, for example the inverter, is also selected approximately equal to this resonant frequency. This results in a quasi load-independent equivalent circuit impedance. Nevertheless, due to the coupling of the primary side and secondary side, complete elimination of this voltage drop is not possible due to interaction of the primary and secondary side, which is often referred to as pole splitting.

The driving frequency of the inverter 11 is a free parameter that can be selected for efficiency maximization. Beneficial for the efficiency is to select the switching frequency in the vicinity of the resonant frequencies

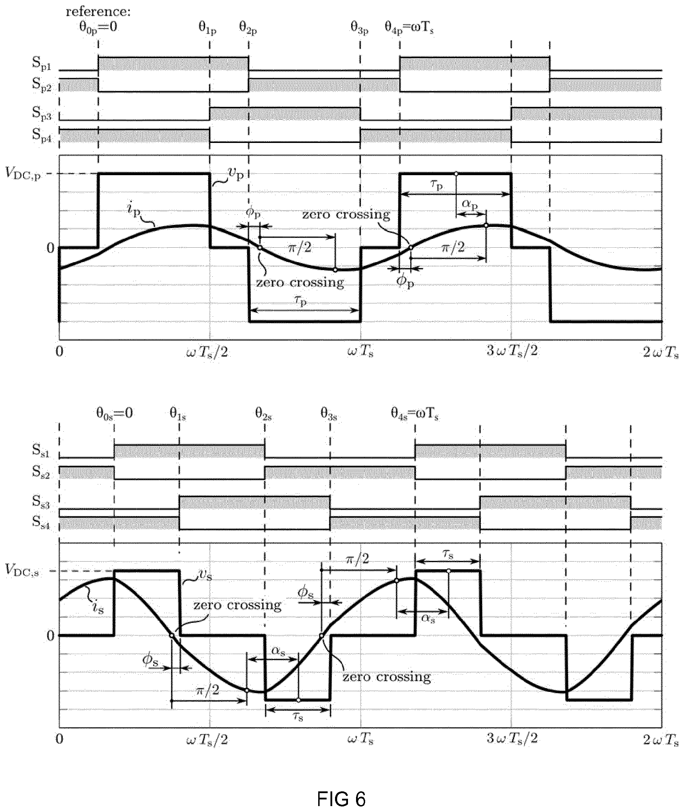

FIG. 6 shows the key voltage and current waveforms of the power stage of FIG. 4 and of the equivalent circuit of FIG. 5. The currents flowing in the circuit are determined by the voltages $v_p$ and $v_s$ applied by the bridge circuits to the terminals of both resonators, and by the component values $C_p$, $L_p$, $M$, $C_s$, and $L_s$. As can be seen in FIG. 6, terminal voltages $v_p$ and $v_s$ each have three levels, i.e., $-V_{DC,p}$, 0, and $V_{DC,p}$ for voltage $v_p$ and $-V_{DC,s}$, 0, and $V_{DC,s}$ for voltage $v_s$. Furthermore, the pulse-width (or duty-ratios $\tau_p$ and $\tau_s$) of voltages $v_p$ and $v_s$, respectively, can be controlled by proper gating of the semiconductor switches $S_{p1}$, $S_{p2}$, $S_{p3}$, and $S_{p4}$ (inverter) and switches $S_{s1}$, $S_{s2}$, $S_{s3}$, and $S_{s4}$ (rectifier). The corresponding gating signals are also shown in FIG 6.

It shall be noted that the gating signals of a bridge circuit during the zero-voltage state (often referred to as the free-wheeling state) can be inversed without changing the terminal voltage, for example at the inverter side (upper graph of FIG. 6) during time interval $\theta_{1p}$-$\theta_{2p}$ switches $S_{p1}$ and $Sp_3$ may be in the on state or switches $S_{p2}$ and $S_{p4}$ may be in the on state in order to obtain a zero voltage (vp = 0).

According to an aspect of the invention, the inverter has a local power control implementation. In an another aspect, which may be provided in addition to the previous aspect or in the alternative, the rectifier has a local impedance control implementation. Both implementations will be explained below for the waveforms given in FIG. 6. The basic operating behavior of the inductive transmission system may be determined by fundamental harmonic analysis, in which the harmonics of the square-wave voltages are neglected.

## Local power control implementation of the inverter (primary side)

For the primary side (upper graph of FIG. 6), the square wave voltage $v_p$ generated by the bridge circuit of the inverter has a controlled driving frequency, i.e. the switching frequency $f_s = 1/T_s$ (with $T_s$ the switching period). This may mean that the voltage edges at time instants $\theta_{0p}$ and $\theta_{2p}$ (see FIG. 6) can be thought of as to be fixed/known.

The control implementation of the inverter makes use of the following sensed quantities: the DC-bus voltage $V_{DC,p}$, the magnitude of current $i_p$, and phase information of current $i_p$. The active input power, averaged over a switching period $T_s$, of the inverter is calculated by:

$$P_p = \frac{1}{T_s} \cdot \int_0^{T_s} v_p(t) \cdot i_p(t) \cdot \mathrm{d}t.$$

According to fundamental harmonic analysis the first-harmonic component $v_{p,1}$ of the voltage $v_p$ and the first-harmonic component $i_{p,1}$ of current $i_p$ may be used to estimate this power as:

$$P_p = \frac{\hat{V}_{p,1} \cdot \hat{I}_{p,1} \cdot \cos\left(\alpha_{v_{p,1},v_{p,1}}\right)}{2},$$

with $\hat{V}_{p,1}$ and $\hat{I}_{p,1}$ the amplitude values of the first-harmonic components $v_{p,1}$ and $i_{p,1}$ respectively, and $\alpha_{v_{p,1},v_{p,1}}$ the angle between $v_{p,1}$ and $i_{p,1}$. Angle $\alpha_{v_{p,1},v_{p,1}}$ is referenced in FIG. 6 as $\alpha_P$. For clarification, FIG. 7 depicts the first harmonic components $v_{p,1}$ and $i_{p,1}$ of the waveforms $v_p$ and $i_p$ shown in FIG. 6.

The approximation of the power using fundamental harmonic analysis is sufficiently accurate since almost all active power is located in the first harmonic components $v_{p,1}$ and $i_{p,1}$. This is especially true when selecting the switching frequency $f_s$ in the vicinity of the resonant frequencies $f_{0,p}$ and $f_{0,s}$ of the resonators, i.e. the resonators show a high impedance against the higher harmonic components of the resonator voltages $v_p$ and $v_p$. Therefore the real currents $i_p$ and $i_s$ are almost equal to their first-harmonic components $i_{p,1}$ and $i_{s,1}$, and are quasi sinusoidal.

Further, according to Fourier's series expansion, the amplitude value $\hat{V}_{p,1}$ is equal to:

$$\hat{V}_{p,1} = \frac{4 \cdot V_{DC,p} \cdot \sin(\tau_p/2)}{\pi},$$

with $V_{DC,p}$ the DC-bus voltage of the inverter and $\tau_p$ the duty-ratio of the square wave voltage $v_p$.

Accordingly, if the phase angle $\alpha_{v_{p,1},v_{p,1}}$, the amplitude value $\hat{I}_{p,1}$, and the DC bus voltage $V_{DC,p}$ are known, the power $P_p$ of the inverter can be controlled by controlling duty-ratio $\tau_p$ of the pulsed AC voltage $v_p$ according to:

$$\tau_p = 2 \cdot \mathrm{asin}\left(\frac{2 \cdot \pi \cdot P_{p,Ts/2}}{4 \cdot V_{DC,p} \cdot \hat{I}_{p,1} \cdot \cos\left(\alpha_{v_{p,1},v_{p,1}}\right)}\right).$$

$V_{DC,p}$, $\hat{I}_{p,1}$, and $\alpha_{v_{p,1},v_{p,1}}$ are the quantities that need to be determined by measurement.

- $V_{DC,p}$ is determined by voltage measurement through unit 171.
- $\alpha_{v_{p,1},v_{p,1}}$ is determined by sensing the phase information of the current $i_p$, for example by sensing the time instant of the zero-crossing of $i_p$, as indicated in FIG. 6. Based on this zero-crossing, the phase angle $\alpha_{v_{p,1},v_{p,1}}$ can be determined through $\alpha_P$, since the voltage pattern (driving frequency) is known. It is alternatively possible to determine the time period $\varphi_P$ between the rising edge of the voltage square wave signal $v_p$ and the zero crossing of the current $i_p$, as shown in FIG. 6, through the relation:

$$\varphi_P + \frac{\pi}{2} = \frac{\tau_P}{2} + \alpha_P$$

in order to determine the phase angle.
- Amplitude value $\hat{I}_{p,1}$ can be obtained from sensing of current $i_p$, for example by sampling the value of $i_p$ a quarter period ($T_s/4$) after the time instant of the zero-crossing of $i_p$. This sensed value is approximately equal to the amplitude value $\hat{I}_{p,1}$.

$\alpha_{v_{p,1},v_{p,1}}$ and $\hat{I}_{p,1}$ may be determined through unit 181. The control equation of $\tau_p$ may be updated each half period (or each period) using these sensed quantities which might be obtained during the previous half period (or previous period).

**Local impedance control implementation of the rectifier (secondary side)**

Based on the first-harmonic approximation (see FIG. 7) $v_{s,1}$ of the voltage $v_s$ and the first-harmonic component $i_{s,1}$ of the current $i_s$, the complex impedance of the rectifier may be defined as the complex ratio between the voltage $v_{s,1}$ and current $i_{s,1}$, resulting in:

$$\underline{Z}_s = \frac{|V_{s,1}|}{|I_{s,1}|}\, e^{-i\cdot\alpha_{v_{s,1},v_{s,1}}} = \frac{\hat{V}_{s,1}}{\hat{I}_{s,1}}\, e^{-i\cdot\alpha_{v_{s,1},v_{s,1}}}$$

with $\hat{V}_{s,1}$ and $\hat{I}_{s,1}$ the amplitude values of the first-harmonic components $v_{s,1}$ and $i_{s,1}$ respectively, and $\alpha_{v_{s,1},v_{s,1}}$ the angle between $v_{s,1}$ and $i_{s,1}$. Further, according to Fourier's series expansion, the amplitude value $\hat{V}_{s,1}$ is equal to:

$$\hat{V}_{s,1} = \frac{4 \cdot V_{DC,s} \cdot \sin(\tau_s/2)}{\pi},$$

with $V_{DC,s}$ the DC-bus voltage of the rectifier and $\tau_s$ the duty-ratio of the square wave voltage $v_s$.

According to an aspect of the present invention, regulation of the impedance is done by controlling the pulse-width (duty-ratio $\tau_s$) and by controlling the phase $\alpha_{v_{s,1},v_{s,1}}$ of the AC square-wave voltage $v_s$ generated by the rectifier, i.e. the voltage is applied with reference to the current.

$V_{DC,s}$, the phase of current $i_{s,1}$, and the amplitude value $\hat{I}_{s,1}$ of current $i_{s,1}$ are the quantities that need to be determined by measurement.

- $V_{DC,s}$ may be determined by voltage measurement through unit 172.
- The phase of current $i_{s,1}$ may be determined by sensing the time instant of the zero-crossing of current $i_s$, as indicated in FIG. 6. The voltage $v_s$ may then be applied with reference to this zero-crossing (in order to apply $\alpha_{v_{s,1},v_{s,1}}$).
- Amplitude value $\hat{I}_{s,1}$ can be obtained from sensing of current $i_s$, for example by sampling the value of $i_s$ a quarter period ($T_s/4$) after the time instant of the zero-crossing of $i_s$. This sensed value, e.g. through unit 182, is approximately equal to the amplitude value $\hat{I}_{s,1}$.

To this end, sensing unit 182 is advantageously configured to measure a phase value and an amplitude value of current $i_s$. Additionally, sensing unit 172 is advantageously configured to measure a voltage level $V_{DC,s}$ of the square wave voltage signal output by rectifier 21. Based on these measurements, controller 162 may be configured to set the phase of the voltage signal $v_s$ by shifting the square pulses (rising edges and/or falling edges) with respect to the current waveform. By way of example, referring to FIG. 6, the phase value of $i_s$ can be determined by sensing the time instant of the zero-crossing of current $i_s$. The amplitude value of current $i_s$ can be obtained by sensing unit 182 for example by sampling the value of $i_s$ a quarter period ($T_s/4$) after the time instant of the zero-crossing of $i_s$, approximating the current amplitude. The controller 162 may be configured to apply

voltage $v_s$ with reference to this zero-crossing (in order to apply $\alpha_S$), and/or adapt the duty cycle by adapting the duty-ratio $\tau_s$, e.g. adjusting the time of occurrence of the rising and/or falling edges of the square pulses. It is alternatively possible to adapt $\varphi_S$, being the time lag between the zero crossing of the current $i_s$ and the rising or falling edge of the voltage wave $v_s$ in order to adjust the phase angle.

The control variables $\alpha_{v_{s,1},v_{s,1}}$ and $\tau_s$ may be updated each half period (or each period) using these sensed quantities which may be obtained during the previous half period (or previous period).

Control variables $\alpha_{v_{s,1},v_{s,1}}$ and $\tau_s$ may be determined such that the system efficiency is optimized for each power set-point and for each specific condition of the input and/or output voltage, the coupling coefficient, and the self-inductance values, for example by minimization of the root mean square (RMS) value of the resonator currents $i_p$ and $i_s$ in the transmission device while maintaining ZVS and/or ZCS conditions in both the inverter and rectifier device.

In the above example, the main controller which defines the power set-point is located at the primary side, but can alternatively be located at the secondary side.

The control mechanisms of the transmitter and receiver as described above, can be exchanged between the two without changing the basic operating principle of the CEET system.

Examples

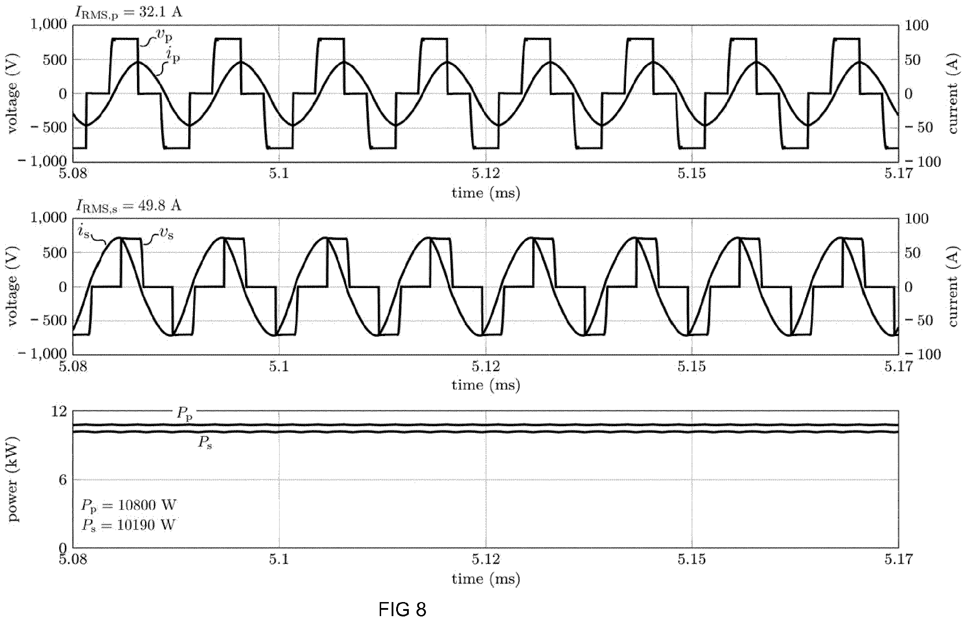

FIGS. 8, 9, and 10 show voltages and currents in one specific embodiment of the transmission system according to the present invention according to FIG. 3, 4, and 5. In this example, the inverter is operated with driving frequency and controlled with local power control while the rectifier is operated with following frequency and controlled with local impedance control.

In FIG. 8, the power is controlled to approximately 11 kW, while the rectifier impedance is set such that ZVS is achieved while the RMS values of the resonator currents $i_p$ and $i_s$ are minimized.

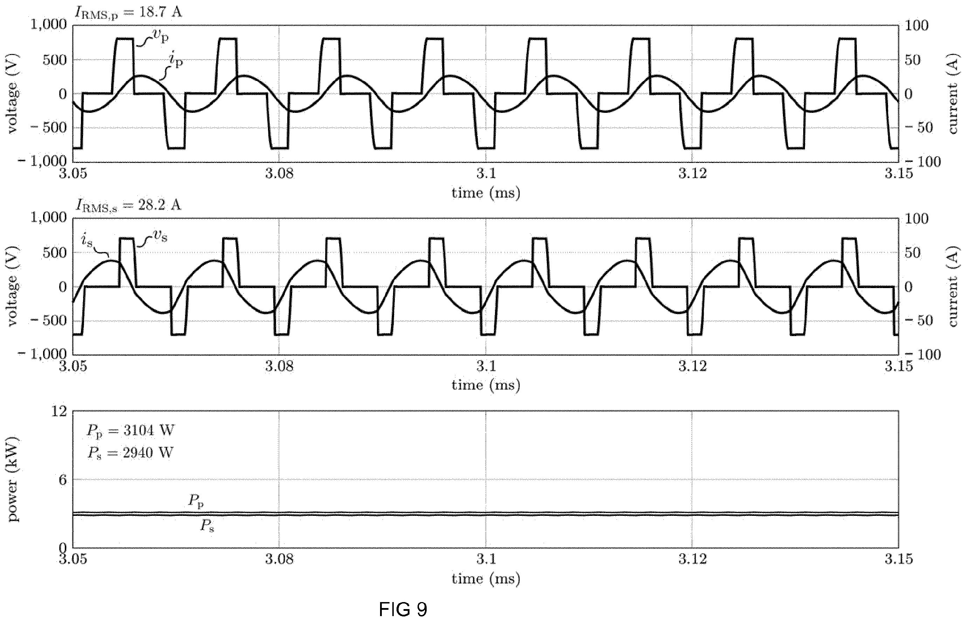

In FIG. 9, the power is controlled to approximately 3 kW, while the rectifier impedance is set such that ZVS is achieved while the RMS values of the resonator currents $i_p$ and $i_s$ are minimized.

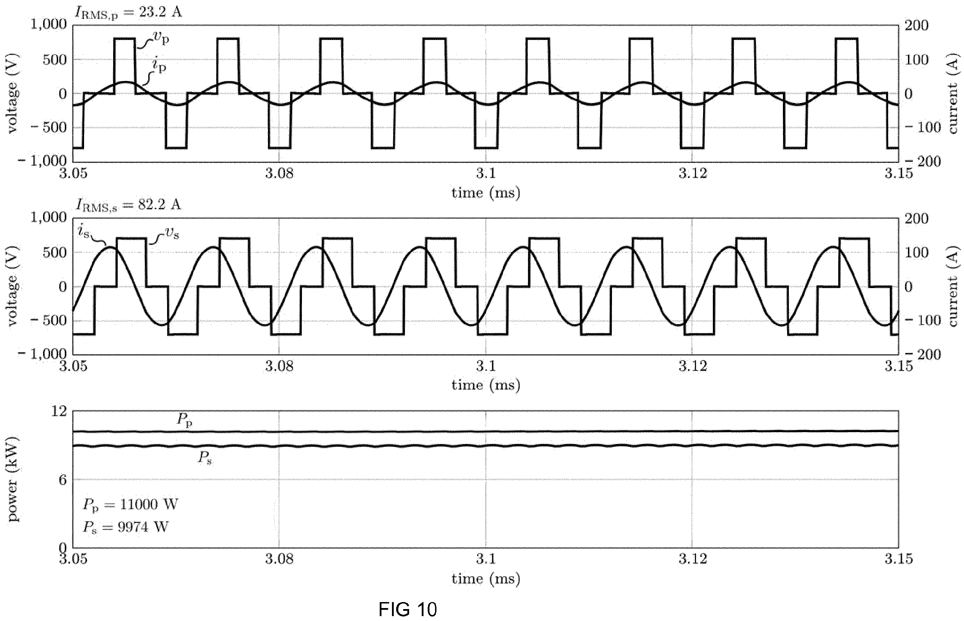

In FIG. 10, the power is controlled to approximately 11 kW, while the rectifier impedance is set such that ZVS is achieved in the rectifier, while the inverter is operated with hard-switching. As a result, the RMS value of the resonator current $i_p$ is lower than for the example in FIG. 8, whereas the RMS value of the resonator current $i_s$ is higher than for the example in FIG. 8. This shows that the impedance setting allows to obtain different waveforms for the same power set-point, and thus optimize the system with regard to different objectives (in this case minimum RMS value of the resonator current $i_s$, which goes at the cost of soft-switching operation in the inverter).

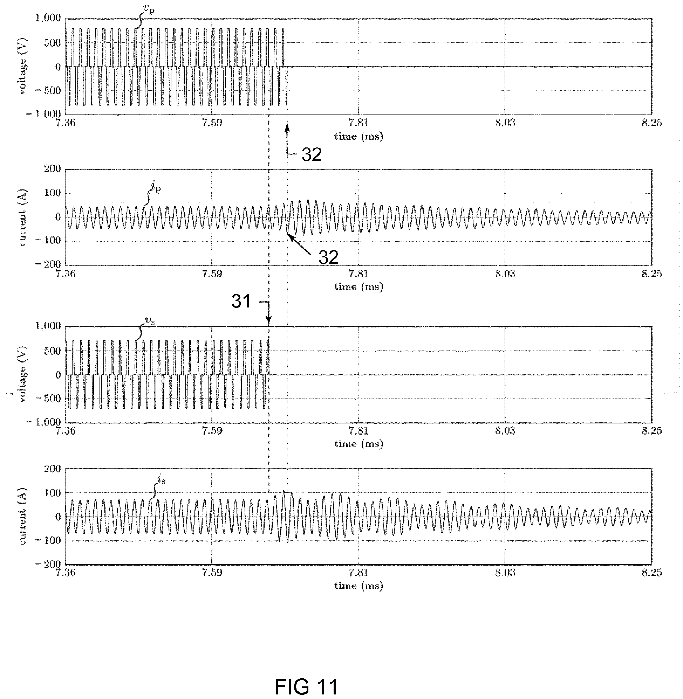

Following an unsafe situation, the secondary side controller 162 may be configured to close both the bottom switches or both the top switches of the rectifier 13 in order to set the rectifier impedance equal to zero. Due to the zero impedance, the resonator currents will increase rapidly which can be detected at the primary side, e.g. through sensing unit 181. The primary side controller may be configured to shut-down the inverter 11 upon detecting this rapid increase, e.g. by comparison with a threshold. This allows to react on the failure within a very short amount of time. Therewith, fast fault protection is provided without high-speed communication. An example of the corresponding waveforms is shown in FIG. 11. Referring to this figure, at time interval 31, secondary bottom switches are shorted, e.g. due to component failure. Due to this, resonator current $i_s$ at the secondary side and consequently the resonator current $i_p$ at the primary side increases. The current amplitude at the primary side is determined by sensing unit 181 and fed to local controller 161 which detects that $i_p$ exceeds a threshold at time instant 32, upon which controller 161 immediately disables the inverter 11.

One advantage of the CEET system according to the present invention is that two active bridge circuits may be used that generate AC square wave voltages that are both duty-cycle modulated and phase shifted against the corresponding resonator current. This is not possible, for example when a passive diode bridge or other types of naturally commutated bridge circuits are used at the rectifier side. Therefore, aspects of the present invention have increased degrees of freedom for efficiency optimization. In a naturally commutated rectifier, which for example is obtained when switches $S_{s1}$ and $S_{s3}$ in FIG. 4 are replaced by diodes, the angle $\varphi_s = 0$ while in the present invention $\varphi_s$ can be controlled. This is beneficial for application with wide voltage and power ranges and widely varying coupling coefficients, in order to achieve a high conversion efficiency.

In FIG. 4 the semiconductor switches used are metal oxide field effect transistors (MOSFETs), which are shown with their internal anti-parallel body diodes.

In FIG. 4, the inverter 11 is arranged in the form of a full-bridge circuit, able to generate three voltage levels, but can alternatively be arranged in another form of a multi-level bridge that is able to generate three or more voltage levels.

In FIG. 4, the rectifier 13 is arranged in the form of a full-bridge circuit, able to generate three voltage levels, but can alternatively be arranged in the form of a half-bridge circuit able to generate two voltage levels, or another form of a bridge that is able to generate two or more voltage levels.

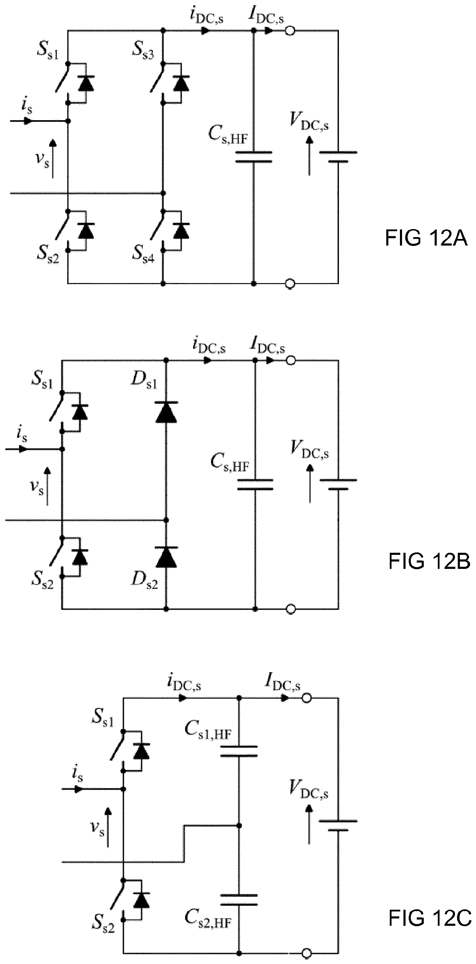

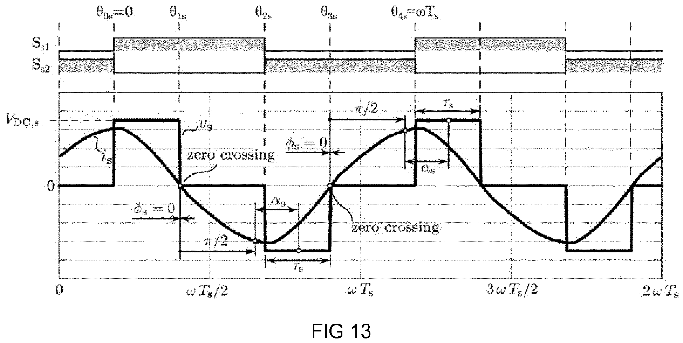

Referring to FIGs 12A-C, possible implementations of bridge circuits that can be used in aspects of the present invention include bridge circuits with two or four actively switchable semiconductor switches. FIG. 12A shows an implementation with four actively switchable switches $S_{S1}$ - $S_{S4}$. FIG. 12B shows an implementation with two actively switchable switches $S_{S1}$ - $S_{S2}$ and diodes $D_{S1}$ - $D_{S2}$ replacing the switches $S_{S3}$ - $S_{S4}$ of FIG. 12A. In FIG. 12C, the two diodes of FIG. 12B are omitted and capacitors $C_{S1}$ - $C_{S2}$ arranged in series between the terminals of the DC bus $V_{DC}$ create a midpoint of the DC bus to which the terminal of the resonator circuit can be connected. The bridge circuit of FIG. 12A allows for adapting both duty cycle and phase of the square wave voltage. The circuits of FIG. 12B and 12C have only one degree of freedom for adapting duty cycle or phase. FIG. 13 shows waveforms obtainable through the bridge circuit of FIG. 12B.

The higher the number of voltage levels that can be generated by the inverter and the rectifier, the higher the degrees of freedom that are available to modulate the AC signals of the resonators, and thus the higher the achievable efficiency of the system since the circulating currents can be reduced and ZVS and/or ZCS conditions can be achieved in a wider voltage and power range, and for a wider variation of the coupling coefficient and self-inductance values. The number of voltage levels can be two, but advantageously is at least three.

To obtain phase and magnitude information of the resonator currents, a current transformer with sense resistors and differential amplifier may be used at the primary side and at the secondary side to sense the amplitude and the phase of the resonator currents. The phase may be sensed by using a zero-crossing detection circuit, which may be implemented with comparators. The amplitude may be sensed by sampling the output of the differential amplifier. Sampling may be done one fourth of a period after the current zero-crossing, for example using an analog to digital converter (ADC). Aside from a current transformer, current and phase sensing can also be implemented in a different way, for example using a shunt resistor or via an indirect measurement such as for example the differential sensing of the voltage across the resonator capacitor, and by subsequent scaling and level shifting of the sensed voltage so that the minimums and maximums of the scaled voltage correspond to the zero crossings of the resonator current.

Aspects of the present invention as described herein are set out in the following numbered clauses.

1. System for contactless transfer of electrical energy, comprising:

a first side comprising a first bridge circuit coupled to a first resonator circuit,
a second side comprising a second bridge circuit coupled to a second resonator circuit,
wherein the first resonator circuit and the second resonator circuit are configured to be contactless inductively coupled for transferring electrical energy,
wherein the second bridge circuit comprises at least two actively switchable semiconductor switches,

characterised in that the second side comprises:

means for sensing phase and magnitude information of a current flowing between the second resonator circuit and the second bridge circuit, and
a second side controller operable to actively switch the semiconductor switches to adapt an impedance of the second side on the basis of the sensed phase and magnitude information.

2. System of clause 1, wherein the second side controller is operable to adapt a duty cycle and/or a phase of a square wave voltage signal applied to the second resonator circuit through active switching of the semiconductor switches.

3. System of clause 2, wherein the second side controller is operable to synchronize the square wave voltage signal with the current based on the sensed phase information.

4. System of clause 2 or 3, wherein the second side controller is operable to adapt the duty cycle and/or the phase of the square wave voltage signal at each period or half period of the current.

5. System of any one of the clauses 2 to 4, wherein the second side controller is operable to adapt the duty cycle and/or the phase of the square wave voltage signal allowing for operating the second bridge circuit in a zero voltage switching mode and/or a zero current switching mode.

6. System of any one of the clauses 2 to 5, wherein the second bridge circuit is configured to generate the square wave voltage signal comprising at least three voltage levels.

7. System of any one of the clauses 2 to 6, wherein the second side controller is operable to adapt a time of occurrence of a rising edge and/or of a falling edge of a square pulse of the square wave voltage signal.

8. System of any one of the preceding clauses, wherein the second bridge circuit comprises four actively switchable semiconductor switches, wherein the second side controller is operable to actively switch the four semiconductor switches to adapt the duty cycle and the phase of the square wave voltage signal.

9. System of any one of the preceding clauses, comprising means for sensing a voltage at an output of the second bridge circuit coupled to the second side controller, and wherein the second side controller is configured to adapt the impedance on the basis of the sensed phase and magnitude information and on the basis of the sensed voltage.

10. System for contactless transfer of electrical energy, comprising:

a first side comprising a first bridge circuit coupled to a first resonator circuit,

a second side comprising a second bridge circuit coupled to a second resonator circuit,

wherein the first resonator circuit and the second resonator circuit are configured to be contactless inductively coupled for transferring electrical energy,

wherein the first bridge circuit comprises at least two actively switchable semiconductor switches,

characterised in that the first side comprises:

means for sensing phase and magnitude information of a first side current flowing between the first resonator circuit and the first bridge circuit, and

a first side controller operable to actively switch the semiconductor switches to adapt a power output by the first side on the basis of the sensed phase and magnitude information.

**11.** System of clause 10, wherein the first bridge circuit is an active bridge circuit operable to generate a square wave input voltage signal applied to the first resonator circuit, and wherein the first side controller is operable to adapt the power by adapting a duty cycle of the square wave input voltage signal by active switching of the active bridge circuit on the basis of the sensed phase and magnitude information of the first side current.

**12.** System of clause 11, wherein the duty cycle of the square wave input voltage signal is adapted for each period or half-period of the input voltage signal.

**13.** System of clause 11 or 12, wherein the first side controller is operable to adapt the duty cycle of the square wave input voltage signal allowing for operating the active bridge circuit in a zero voltage switching mode and/or a zero current switching mode.

**14.** System of any one of the clauses 11 to 13, wherein the first side controller is operable to adapt a time of occurrence of a rising edge and/or of a falling edge of a square pulse of the square wave input voltage signal.

**15.** System of clause 14, wherein the active bridge circuit is configured to generate the square wave input voltage signal comprising at least three voltage levels.

**16.** System of any one of the clauses 10 to 15, comprising means for sensing a voltage at an input of the first bridge circuit coupled to the first side controller, and wherein the first side controller is configured to adapt the power on the basis of the sensed phase and magnitude information and on the basis of the sensed voltage.

**17.** System of any one of the clauses 1 to 9, wherein the first side is as in any one of the clauses 10 to 16.

**18.** Inductive power transfer system for a vehicle, comprising the system of any one of the preceding clauses, wherein the first side is comprised in a ground assembly of the inductive power transfer system, and wherein the second side is mounted on the vehicle.

**19.** Vehicle assembly for inductive power transfer between the vehicle assembly and a ground assembly, comprising the second side of the system of any one of the clauses 1 to 17.

**20.** Method for contactless transfer of electrical energy, comprising:

inputting electrical energy in a first side resonator circuit and transferring at least part of the electrical energy to a second side resonator circuit,

sensing phase and magnitude information of a second side current flowing between the second side resonator circuit and a rectifying bridge circuit coupled thereto, and actively adapting a switching time of the bridge circuit.

**21.** Method of clause 20, wherein the bridge circuit applies a square wave voltage signal to the second side resonator circuit.

**22.** Method of clause 21, comprising determining a duty cycle and/or a phase of the square wave voltage signal at each period or half-period of the second side current.

**23.** Method of clause 22, wherein the duty cycle and/or the phase is determined on the basis of the sensed phase and magnitude information of the second side current.

**24.** Method of clause 22 or 23, comprising adapting the switching time of the rectifying bridge circuit based on the determined duty cycle and/or phase of the square wave voltage signal at each period or half-period of the voltage signal.

**25.** Method for contactless transfer of electrical energy, comprising:

inputting electrical energy in a first side resonator circuit and transferring at least part of the electrical energy to a second side resonator circuit,

sensing phase and magnitude information of a first side current flowing between the first side resonator circuit and an inverting active bridge circuit coupled thereto and actively adapting a switching time of the active bridge circuit.

**26.** Method of clause 25, comprising determining a duty cycle and/or a phase of a square wave input voltage signal at each period or half-period of the input voltage signal and adapting the switching time of the active bridge circuit based on the determined duty cycle and/or phase of the square wave input voltage signal at each period or half-period of the input square wave voltage signal.

**27.** Method of any one of clause 20 to 24, comprising the method of clause 25 or 26.

## Claims

1. System for contactless transfer of electrical energy, comprising:

   a first side comprising a first bridge circuit coupled to a first resonator circuit,
   a second side comprising a second bridge circuit coupled to a second resonator circuit,
   wherein the first resonator circuit and the second resonator circuit are configured to be contactless inductively coupled for transferring electrical energy,
   wherein the second bridge circuit comprises at least two actively switchable semiconductor switches,

   **characterised in that** the second side comprises:

   means for sensing phase and magnitude information of a current flowing between the second resonator circuit and the second bridge circuit, and
   a second side controller operable to actively switch the semiconductor switches to adapt an impedance of the second side on the basis of the sensed phase and magnitude information.

2. System of claim 1, wherein the second side controller is operable to adapt a duty cycle and/or a phase of a square wave voltage signal applied to the second resonator circuit through active switching of the semiconductor switches.

3. System of claim 2, wherein the second side controller is operable to synchronize the square wave voltage signal with the current based on the sensed phase information.

4. System of claim 2 or 3, wherein the second side controller is operable to adapt the duty cycle and/or the phase of the square wave voltage signal at each period or half period of the current.

5. System of any one of the claims 2 to 4, wherein the second side controller is operable to adapt a time of occurrence of a rising edge and/or of a falling edge of a square pulse of the square wave voltage signal.

6. System of any one of the preceding claims, wherein the second bridge circuit comprises four actively switchable semiconductor switches, wherein the second side controller is operable to actively switch the four semiconductor switches to adapt the duty cycle and the phase of the square wave voltage signal.

7. System of any one of the preceding claims, comprising means for sensing a voltage at an output of the second bridge circuit coupled to the second side controller, and wherein the second side controller is configured to adapt the impedance on the basis of the sensed phase and magnitude information and on the basis of the sensed voltage.

8. System for contactless transfer of electrical energy, comprising:

   a first side comprising a first bridge circuit coupled to a first resonator circuit,
   a second side comprising a second bridge circuit coupled to a second resonator circuit,
   wherein the first resonator circuit and the second resonator circuit are configured to be contactless inductively coupled for transferring electrical energy,
   wherein the first bridge circuit comprises at least two actively switchable semiconductor switches,

   **characterised in that** the first side comprises:

   means for sensing phase and magnitude information of a first side current flowing between the first resonator circuit and the first bridge circuit, and
   a first side controller operable to actively switch the semiconductor switches to adapt a power output by the first side on the basis of the sensed phase and magnitude information.

9. System of claim 8, wherein the first bridge circuit is an active bridge circuit operable to generate a square wave input voltage signal applied to the first resonator circuit, and wherein the first side controller is operable to adapt the power by adapting a duty cycle of the square wave input voltage signal by active switching of the active bridge circuit on the basis of the sensed phase and magnitude information of the first side current.

10. System of claim 9, wherein the first side controller is operable to adapt a time of occurrence of a rising edge and/or of a falling edge of a square pulse of the square wave input voltage signal.

11. System of any one of the claims 1 to 7, wherein the first side is as in any one of the claims 8 to 10.

12. Inductive power transfer system for a vehicle, comprising the system of any one of the preceding claims, wherein the first side is comprised in a ground assembly of the inductive power transfer system, and wherein the second side is mounted on the vehicle.

13. Method for contactless transfer of electrical energy, comprising:

inputting electrical energy in a first side resonator circuit and transferring at least part of the electrical energy to a second side resonator circuit,
sensing phase and magnitude information of a second side current flowing between the second side resonator circuit and a rectifying bridge circuit coupled thereto, and actively adapting a switching time of the rectifying bridge circuit.

14. Method for contactless transfer of electrical energy, comprising:

inputting electrical energy in a first side resonator circuit and transferring at least part of the electrical energy to a second side resonator circuit,
sensing phase and magnitude information of a first side current flowing between the first side resonator circuit and an inverting active bridge circuit coupled thereto and actively adapting a switching time of the active bridge circuit.

15. Method of claim 13, comprising the method of claim 14.

TRANSMISSION DEVICE

TRANSMITTER
(INVERTER)

RESONATOR

RESONATOR

RECEIVER
(RECTIFIER)

LOAD

$V_i$

$k$

INDUCTIVE COUPLING

$V_o$

FIG 1

TRANSMISSION DEVICE

RECTIFIER

TRANSMITTER
(INVERTER)

RESONATOR

RESONATOR

RECEIVER
(RECTIFIER)

LOAD

$V_{ac}$

$V_i$

$k$

INDUCTIVE COUPLING

$V_o$

FIG 2

FIG 3

FIG 4

FIG 6

$$M = k \sqrt{L_p \cdot L_s}$$

FIG 5

FIG 7

FIG 8

EP 3 512 072 A1

FIG 9

EP 3 512 072 A1

FIG 10

EP 3 512 072 A1

FIG 11

23

$S_{s1}$ $S_{s3}$ $i_{DC,s}$ $I_{DC,s}$

$i_s$

$C_{s,HF}$ $V_{DC,s}$

$v_s$

$S_{s2}$ $S_{s4}$

**FIG 12A**

$S_{s1}$ $D_{s1}$ $i_{DC,s}$ $I_{DC,s}$

$i_s$

$C_{s,HF}$ $V_{DC,s}$

$v_s$

$S_{s2}$ $D_{s2}$

**FIG 12B**

$i_{DC,s}$ $I_{DC,s}$

$S_{s1}$ $C_{s1,HF}$

$i_s$

$V_{DC,s}$

$v_s$

$C_{s2,HF}$

$S_{s2}$

**FIG 12C**

FIG 13

Europäisches
Patentamt

European
Patent Office

Office européen
des brevets

**EUROPEAN SEARCH REPORT**

Application Number

EP 18 15 1714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIN LIU ET AL: "Analysis and Design of a Wireless Power Transfer System with Dual Active Bridges", ENERGIES, vol. 10, no. 10, 12 October 2017 (2017-10-12), page 1588, XP055481628, CH ISSN: 1996-1073, DOI: 10.3390/en10101588 * paragraphs [Sections2], [0003]; figures 1,7 * | 1-15 | INV. H02J50/12 H02M3/335 |
| X | BERGER ANDREAS ET AL: "A Wireless Charging System Applying Phase-Shift and Amplitude Control to Maximize Efficiency and Extractable Power", IEEE TRANSACTIONS ON POWER ELECTRONICS, INSTITUTE OF ELECTRICAL AND ELECTRONICS ENGINEERS, USA, vol. 30, no. 11, 1 November 2015 (2015-11-01), pages 6338-6348, XP011662943, ISSN: 0885-8993, DOI: 10.1109/TPEL.2015.2410216 [retrieved on 2015-07-10] * paragraphs [SectionIIandIII], [00Vb]; figures 1,5 * | 1-15 | |
| | -/-- | | TECHNICAL FIELDS SEARCHED (IPC) H02J H02M |

The present search report has been drawn up for all claims

| Place of search | Date of completion of the search | Examiner |
|---|---|---|
| Munich | 6 June 2018 | Grosse, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 15 1714

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIANHONG CHEN ET AL: "Research on bidirectional contactless resonant converter for energy charging between EVs", IECON 2013 - 39TH ANNUAL CONFERENCE OF THE IEEE INDUSTRIAL ELECTRONICS SOCIETY, IEEE, 10 November 2013 (2013-11-10), pages 1236-1241, XP032538565, ISSN: 1553-572X, DOI: 10.1109/IECON.2013.6699309 [retrieved on 2013-12-30] * paragraph [SectionIII]; figures 6,12,17 * | 1-15 | |
| X | LIU FENGHUA ET AL: "A phase-shift soft-switching control strategy for dual active wireless power transfer system", 2017 IEEE ENERGY CONVERSION CONGRESS AND EXPOSITION (ECCE), IEEE, 1 October 2017 (2017-10-01), pages 2573-2578, XP033247138, DOI: 10.1109/ECCE.2017.8096488 * paragraph [SectionIII]; figures 6,10 * | 1-15 | |
| A | WO 2017/062552 A1 (TC1 LLC [US]) 13 April 2017 (2017-04-13) * paragraphs [0088] - [0097]; figure 9 * | 1-15 | |

TECHNICAL FIELDS SEARCHED (IPC)

The present search report has been drawn up for all claims

| Place of search | Date of completion of the search | Examiner |
|---|---|---|
| Munich | 6 June 2018 | Grosse, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 15 1714

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2018

| Patent document cited in search report | | Publication date | Patent family member(s) | | Publication date |
|---|---|---|---|---|---|
| WO 2017062552 | A1 | 13-04-2017 | US 2017104369 | A1 | 13-04-2017 |
| | | | WO 2017062552 | A1 | 13-04-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8643326 B
- US 2017047768 A1

- US 2017047768 A

**Non-patent literature cited in the description**

- **R. BOSSHARD.** Multi-Objective Optimization of 50 kW/85 kHz IPT System for Public Transport. *IEEE JOURNAL OF EMERGING AND SELECTED TOPICS IN POWER ELECTRONICS,* vol. 4 (4), 1370-1382